# EUROPEAN PATENT APPLICATION

(11) **EP 4 750 026 A1**
(43) Date of publication of application: **27.05.2026**
(21) Application number: 25216940.4
(22) Date of filing: 19.11.2025
(51) Int. Cl.: H04L 47/34, H04L 47/62, H04L 49/9057, H04L 49/90

(54) **NETWORK PACKET PROCESSING DEVICE USING MULTI-CORE PARALLEL PROCESSING AND RELATED NETWORK PACKET FORWARDING METHOD**

(30) Priority: 21.11.2024 CN 202411671132
(71) Applicant: Airoha Technology (Suzhou) Limited, Suzhou City Jiangsu 215021 (CN)
(72) Inventor: DU, Peng, Nanjing City, 210037 (CN); YAN, Fei, Nanjing City, 210037 (CN)
(74) Representative: Hoefer & Partner Patentanwälte mbB

(57) **Abstract**

A network packet processing device (100) includes a parallel processing circuit (104), a packet dispatch circuit (102) and a packet order-preserving processing circuit (106). The parallel processing circuit (104) includes a plurality of packet processing circuits (112_1, 112_N) for processing different packets in parallel. Each packet processing circuit (112_1, 112_N) includes a network processing unit, NPU, core (116_1, 116_N) . The packet dispatch circuit (102) distributes the packets to the packet processing circuits (112_1, 112_N), respectively. The packet order-preserving processing circuit (106) performs an order-preserved sending operation upon a plurality of processed packets generated by the parallel processing circuit (104), wherein the processed packets include first and second processed packets corresponding to first and second packets in the packets, respectively, and an order of the first and second processed packets in an output flow sent from the packet order-preserving processing circuit (106) is the same as an order of the first and second packets in an input flow received by the packet dispatch circuit (102).

## Description

### BACKGROUND OF THE INVENTION

### 1. FIELD OF THE INVENTION

The present invention relates to network packet forwarding, and more particularly, to a network packet processing device that improves packet forwarding efficiency through multi-core parallel processing and a related network packet forwarding method.

### 2. DESCRIPTION OF THE PRIOR ART

A gateway is a common network device arranged to connect different networks and forward packets from one network to another, such as packet forwarding between wired and wireless networks. A network processing unit (NPU) is a high-speed programmable processor specifically designed for network packet processing (e.g., network packet forwarding). It has special features and architectures to accelerate network packet processing efficiency. Generally speaking, to achieve interoperability between various models of wireless chips, packet forwarding on a wireless end is handled by the NPU. However, under a condition where high-speed packet forwarding is demanded, the NPU may become a bottleneck. For example, the NPU using a single core to process flows has low packet forwarding efficiency, and even increasing the operating frequency of the NPU cannot achieve the high-speed forwarding goal.

### SUMMARY OF THE INVENTION

One of the objectives of the claimed invention is to provide a network packet processing device that improves packet forwarding efficiency through multi-core parallel processing and a related network packet forwarding method. Network packet processing devices and a network packet forwarding method according to the invention are defined in the independent claims. The dependent claims define preferred embodiments thereof.

According to a first aspect of the present invention, an exemplary network packet processing device is disclosed. The exemplary network packet processing device includes a parallel processing circuit, a packet dispatch circuit, and a packet order-preserving processing circuit. The parallel processing circuit includes a plurality of packet processing circuits arranged to process different packets in parallel, wherein each of the plurality of packet processing circuits includes an NPU core. The packet dispatch circuit is arranged to dispatch a plurality of packets to the plurality of packet processing circuits, respectively. The packet order-preserving processing circuit is arranged to perform an order-preserved sending operation upon a plurality of processed packets generated by the parallel processing circuit, wherein the plurality of processed packets include a first processed packet and a second processed packet corresponding to a first packet and a second packet included in the plurality of packets, respectively, and an order of the first processed packet and the second processed packet in an output flow sent from the packet order-preserving processing circuit is the same as an order of the first packet and the second packet in an input flow received by the packet dispatch circuit.

According to a second aspect of the present invention, an exemplary network packet forwarding method is disclosed. The exemplary network packet forwarding method includes: processing, by a plurality of packet processing circuits of a parallel processing circuit, different packets in parallel, wherein each of the plurality of packet processing circuits includes a network processing unit (NPU) core; dispatching a plurality of packets to the plurality of packet processing circuits, respectively; and performing an order-preserved sending operation upon a plurality of processed packets generated by the parallel processing circuit, wherein the plurality of processed packets include a first processed packet and a second processed packet corresponding to a first packet and a second packet included in the plurality of packets, respectively, and an order of the first processed packet and the second processed packet in an output flow sent is the same as an order of the first packet and the second packet in an input flow.

According to a third aspect of the present invention, an exemplary network packet processing device is disclosed. The exemplary network packet processing device includes a parallel processing circuit, a packet dispatch circuit, and a packet sending circuit. The parallel processing circuit includes a plurality of NPU cores, wherein the plurality of NPU cores include a first NPU core, and the first NPU core is arranged to complete processing of a first packet individually without relying on other NPU cores included in the plurality of NPU cores, and generate a first processed packet. The packet dispatch circuit is arranged to dispatch the first packet to the first NPU core. The packet sending circuit is arranged to send the first processed packet.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a network packet processing device according to an embodiment of the present invention.
FIG. 2 is a flowchart of a packet dispatch operation and a packet serial number dispatch operation according to an embodiment of the present invention.
FIG. 3 is a flowchart of a packet processing operation according to an embodiment of the present invention.
FIG. 4 is a flowchart of an order-preserving sending operation supporting a packet out-of-order error handling mechanism according to an embodiment of the present invention.
FIG. 5 is a flowchart of a packet dispatch operation and a packet serial number dispatch operation both supporting a packet out-of-order error handling mechanism according to an embodiment of the present invention.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

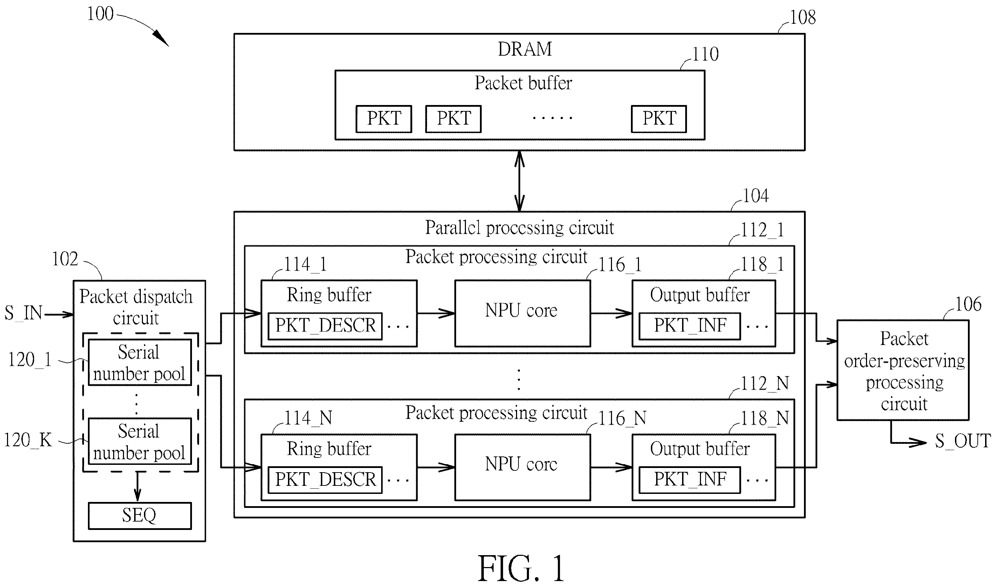

FIG. 1 is a diagram illustrating a network packet processing device according to an embodiment of the present invention. For example, the network packet processing device 100 may be employed by network equipment such as a gateway. As shown in FIG. 1, the network packet processing device 100 may include a packet dispatch circuit 102, a parallel processing circuit 104, a packet order-preserving processing circuit 106, and a dynamic random access memory (DRAM) 108. Please note that only the components pertinent to the present invention are illustrated in FIG. 1. In practice, the network packet processing device 100 may include additional components to achieve designated functions. For example, the network packet processing device 100 may further include a central processing unit (CPU), a hardware-accelerated forwarding circuit (also called frame engine), a network interface card (NIC), etc.

When the network packet processing device 100 receives a network packet, hereinafter referred to as a packet, PKT from a network port, the packet PKT is written into a packet buffer 110 allocated in the DRAM 108. For example, when the packet buffer 110 is initialized, it is divided into a plurality of storage blocks according to a fixed block size, where the storage blocks are arranged to store a plurality of packets PKT, respectively. The parallel processing circuit 104 proposed by the present invention can access the packet PKT in the packet buffer 110 through direct memory access (DMA).

The parallel processing circuit 104 includes a plurality of packet processing circuits 112_1-112_N (**N ≥ 2**) used for processing different packets PKT in parallel. In addition, the packet processing circuits 112_1-112_N may have the same circuit architecture. As shown in FIG. 1, the packet processing circuit 112_1 includes a ring buffer 114_1, an NPU core 116_1, and an output buffer (e.g., a first-in first-out (FIFO) buffer) 118_1; and the packet processing circuit 112_N includes a ring buffer 114_N, an NPU core 116_N, and an output buffer (e.g., a FIFO buffer) 118_N. The NPU cores 116_1-116_N in the parallel processing circuit 104 may be implemented using a multi-core RISC-V processor, but the present invention is not limited thereto.

The packet dispatch circuit 102 is arranged to dispatch a plurality of packets to the packet processing circuits 112_1-112_N, respectively, so as to perform parallel processing through the packet processing circuits 112_1-112_N (particularly, NPU cores 116_1-116_N in packet processing circuits 112_1-112_N). It should be noted that each of the NPU cores 116_1-116_N completes processing of a packet individually without relying on other NPU cores. In other words, the parallel processing performed by the parallel processing circuit 104 is not pipeline processing. Therefore, when each of the NPU cores 116_1-116_N is dealing with its packet processing task, it does not affect packet processing tasks being performed by other NPU cores. In this way, the multi-core parallel processing architecture proposed by the present invention can effectively improve packet forwarding efficiency.

The packet order-preserving processing circuit 106 supports a packet sending function, and therefore can be used as a packet sending circuit to send a processed packet individually generated by each of the NPU cores 116_1-116_N in the parallel processing circuit 104. In this embodiment, in addition to the packet sending function, the packet order-preserving processing circuit 106 may further support a packet order-preserving function. That is, the packet order-preserving processing circuit 106 is arranged to perform an order-preserved sending operation upon a plurality of processed packets generated by the parallel processing circuit 104 (e.g., to-be-forwarded packets that are generated through parallel processing of different NPU cores 116_1-116_N). In other words, during actual packet forwarding, the processed packets generated through parallel processing of different NPU cores 116_1-116_N must maintain an order in the original flow and have no out-of-order packets. For example, the processed packets generated through parallel processing of different NPU cores 116_1-116_N include a first processed packet and a second processed packet corresponding to a first packet and a second packet included in a plurality of packets dispatched by the packet dispatch circuit 102, respectively. The order of the first processed packet and the second processed packet in an output flow S_OUT sent from the packet order-preserving processing circuit 106 is the same as the order of the first packet and the second packet in an input flow S_IN received by the packet dispatch circuit 102.

The operational details of the packet dispatch circuit 102, the parallel processing circuit 104, and the packet order-preserving processing circuit 106 will be explained below with reference to the accompanying drawings.

As mentioned above, the processed packets generated through parallel processing of different NPU cores 116_1-116_N must maintain the order in the original flow and have no out-of-order packets during actual packet forwarding. In order to ensure that the processed packets maintain the order in the original flow during packet forwarding, the multi-core parallel processing architecture proposed by the present invention collaborates with packet serial numbers, and detects presence of out-of-order packets by checking the packet serial numbers. In this embodiment, when the input flow S_IN passes through the packet dispatch circuit 102, each packet is assigned a packet serial number SEQ. Then, the packet dispatch circuit 102 follows a predetermined dispatch strategy (e.g., a predetermined order of packet processing circuits 112_1-112_N) to dispatch a plurality of packets to the packet processing circuits 112_1-112_N for parallel processing. In addition, each packet processing circuit 112_1/112_N includes a ring buffer 114_1/114_N for storing packet descriptors PKT_DESCR of packets. Each packet descriptor PKT_DESCR records some metadata of a corresponding packet. For example, the packet descriptor PKT_DESCR includes a plurality of fields used for recording a buffer address pkt_address of a packet in the packet buffer 110 and a packet length pkt_len of the packet. In this embodiment, in addition to the regular information, the packet descriptor PKT_DESCR may further record the packet serial number SEQ assigned by the packet dispatch circuit 102.

In this embodiment, the packet dispatch circuit 102 may have a plurality of serial number pools 120_1-120_K ( **K ≥ 2** ), where different serial number pools 120_1-120_K have different numerical ranges that do not overlap with each other, and each serial number pool can use a counter which starts counting from the initial value to the maximum value and then rolls back to the initial value to continue counting. For example, assuming that the packet dispatch circuit 102 has two serial number pools 120_1 and 120_K (K=2), the serial number SEQ provided by the serial number pool 120_1 can fall within one numerical range {0, 1, 2, 3, ..., 32767}, and the serial number SEQ provided by the other serial number pool 120_K (K=2) can fall within the other numerical range {32768, 32769, 32770, ..., 65535}. It should be noted that this is for illustrative purposes only, and is not meant to be a limitation of the present invention. In practice, the number of serial number pools and the numerical range of each serial number pool may be set based on actual design considerations.

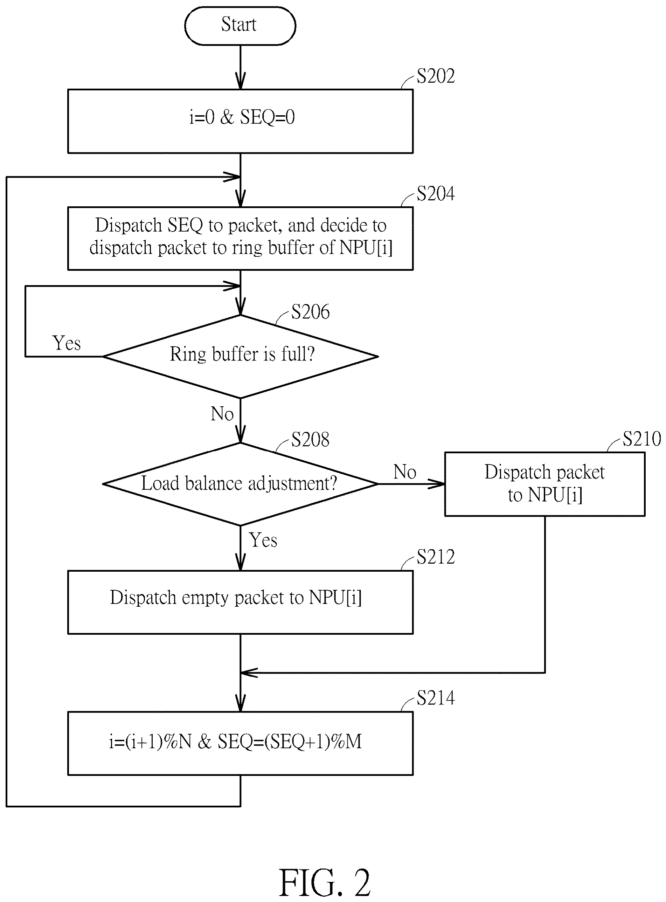

FIG. 2 is a flowchart of a packet dispatch operation and a packet serial number dispatch operation according to an embodiment of the present invention. The operations shown in FIG. 2 may be performed by the packet dispatch circuit 102 shown in FIG. 1. Provided that the result is substantially the same, the steps are not required to be executed in the exact order shown in FIG. 2. In step S202, the packet dispatch circuit 102 initializes a parameter i and a packet serial number SEQ. The parameter i is arranged to control packet dispatch, and the packet serial number SEQ is arranged to control packet serial number dispatch. For brevity and simplicity, it is assumed that the packet serial number SEQ is provided by the serial number pool 120_1, and the numerical range of the packet serial number SEQ is {0, 1, 2, ..., M-1}. In addition, the numerical range of the parameter i is {0, 1, 2, ..., N-1}, and N NPU cores 116_1-116_N are denoted by NPU[0]-NPU[N-1], respectively. Therefore, the initial value of the parameter i is 0 (i.e., i=0), and the initial value of the packet serial number SEQ is 0 (i.e., SEQ=0).

In step S204, the packet dispatch circuit 102 dispatches the packet serial number SEQ (i.e., SEQ=0 at this moment) to a packet in the input flow S_IN, and decides to dispatch the packet to the ring buffer of the NPU core NPU[i]. In step S206, the packet dispatch circuit 102 determines whether the ring buffer of the NPU core NPU[i] is full currently. If the ring buffer of the NPU core NPU[i] is full currently, it means that the NPU core NPU[i] is currently in a fully loaded state. Therefore, the packet dispatch circuit 102 keeps waiting until the ring buffer of the NPU core NPU[i] has available storage space. If the packet dispatch circuit 102 finds that the ring buffer of the NPU core NPU[i] has available storage space currently, the flow proceeds to step S208.

In step S208, the packet dispatch circuit 102 determines whether to enable load balance adjustment. If the processing capabilities of NPU cores 116_1-116_N are unbalanced and the packet dispatch circuit 102 needs to keep waiting in step S206 until the ring buffer of the current NPU core NPU[i] has available storage space, the packet dispatch circuit 102 may perform load balance adjustment to alleviate the processing burden of the current NPU core NPU[i]. In step S212, the packet dispatch circuit 102 dispatches an empty packet (i.e., a packet that does not need to be processed) to the current NPU core NPU[i]. That is, the packet dispatch circuit 102 dispatches the current packet serial number SEQ to the empty packet, and writes the current packet serial number SEQ into the ring buffer of the NPU core NPU[i]. In other words, the packet descriptor PKT_DESCR of the empty packet records the current packet serial number SEQ. In addition, because load balance adjustment dispatches one empty packet to the current NPU core NPU[i], the packet dispatch circuit 102 can dispatch a packet in the input flow S_IN that would otherwise be dispatched to the current NPU core NPU[i] to another NPU core (e.g., a next NPU core NPU[i+1]).

If the packet dispatch circuit 102 does not need to wait for the ring buffer to have available storage space (step S206), that is, the current NPU core NPU[i] is not yet fully loaded, the packet dispatch circuit 102 does not need to perform load balance adjustment. In step S210, the packet dispatch circuit 102 dispatches the packet in the input flow S_IN to the current NPU core NPU[i]. That is, the packet dispatch circuit 102 dispatches the current packet serial number SEQ to the packet in the input flow S_IN, and writes the current packet serial number SEQ (i.e., SEQ=0 at this moment) to the ring buffer of the NPU core NPU[i]. In other words, the packet descriptor PKT_DESCR of the packet in the input flow S_IN records the current packet serial number SEQ.

In step S214, the packet dispatch circuit 102 updates the parameter i and the packet serial number SEQ (e.g., i=(i+1)%N and SEQ=(SEQ+1)%M). Next, the process returns to step S204. Therefore, the packet dispatch circuit 102 dispatches the updated packet serial number SEQ to a packet in the input flow S_IN, and decides to dispatch the packet to the NPU core NPU[i] according to the updated parameter i. Please note that, if load balance adjustment (step S212) was performed previously, since the packet that would otherwise be dispatched to the previous NPU core NPU[i-1] is replaced by an empty packet, the packet dispatch circuit 102 decides that the packet to be dispatched to the current NPU core NPU[i] is the packet (i.e., the packet in the input flow) that would otherwise be dispatched to the previous NPU core NPU[i-1]; if load balance adjustment (step S212) was not performed previously, the packet dispatch circuit 102 decides that the packet to be dispatched to the current NPU core NPU[i] is the next packet (i.e., the next packet in the input flow) following the packet processed by the previous NPU core NPU[i-1].

According to the flow shown in FIG. 2, the packet dispatch circuit 102 adopts an average dispatch method. Therefore, based on the predetermined order of the packet processing circuits 112_1 to 112_N (e.g., i=(i+1)%N), a plurality of packets, including packets actually received by the network packet processing device 100 from the network and/or empty packets that are used by the packet dispatch circuit 102 for load balance adjustment, are dispatched to the packet processing circuits 112_1-112_N for multi-core parallel processing. For example, the packet dispatch circuit 102 dispatches a packet PKT₀ (which is a packet that needs to be forwarded or an empty packet that does not need to be forwarded) with a packet serial number SEQ=0 to the NPU core NPU[0] for packet processing, dispatches a packet PKT₁ (which is a packet that needs to be forwarded or an empty packet that does not need to be forwarded) with a packet serial number SEQ=1 to the NPU core NPU[1] for packet processing, dispatches a packet PKT₂ (which is a packet that needs to be forwarded or an empty packet that does not need to be forwarded) with a packet serial number SEQ=2 to the NPU core NPU[2] for packet processing, and so on. In addition, after a packet PKT_{N-1} (which is a packet that needs to be forwarded or an empty packet that does not need to be forwarded) with a packet serial number SEQ=N-1 is dispatched to the NPU core NPU[N-1] for packet processing, the packet dispatch circuit 102 dispatches a packet PKT_{N} (which is a packet that needs to be forwarded or an empty packet that does not need to be forwarded) with a packet serial number SEQ=N to the NPU core NPU [0] for packet processing, dispatches a packet PKT_{N+1} (which is a packet that needs to be forwarded or an empty packet that does not need to be forwarded) with a packet serial number SEQ=N+1 to the NPU core NPU [1] for packet processing, dispatches a packet PKT_{N+2} (which is a packet that needs to be forwarded or an empty packet that does not need to be forwarded) with a packet serial number SEQ=N+2 to the NPU core NPU [2] for packet processing, and so on. Furthermore, step S214 is repeatedly executed to update the packet serial number SEQ (i.e., SEQ=SEQ+1). Since the numerical range of the packet serial number SEQ is {0, 1, 2, ..., M-1}, when the packet serial number SEQ continuously increases and reaches the maximum value M-1, the next packet serial number SEQ rolls back to the minimum value 0 (i.e., SEQ=(SEQ+1) %M=0) . In other words, when there is a total of M packet serial numbers {0, 1, 2, ..., M-1}, an order of packet serial numbers is **0→1→2→3...→(M-2)→(M-1)→0→1→2→3....** After the packet PKT_{M-1} (which is a packet that needs to be forwarded or an empty packet that does not need to be forwarded) with a packet serial number SEQ=M-1 is dispatched to the NPU core NPU[(M-1)%N], the packet dispatch circuit 102 dispatches a packet PKT_{M} (which is a packet that needs to be forwarded or an empty packet that does not need to be forwarded) with a packet serial number SEQ=0 to the NPU core NPU[M%N] for packet processing, dispatches a packet PKT_{M+1} (which is a packet that needs to be forwarded or an empty packet that does not need to be forwarded) with a packet serial number SEQ=1 to the NPU core NPU[(M+1)%N] for packet processing, dispatches a packet PKT_{M+2} (which is a packet that needs to be forwarded or an empty packet that does not need to be forwarded) with a packet serial number SEQ=2 to the NPU core NPU[(M+2)%N] for packet processing, and so on.

Step S214 will be repeatedly executed to update the parameter i (i.e., i=i+1). Since the parameter i is the index value of the NPU core and the number of NPU cores 116_1-116_N (i.e., NPU[0]-NPU[N-1]) is N, the numerical range of parameter i is {0, 1, 2, ..., N-1}. Therefore, when the value of the parameter i continuously increases and reaches the maximum value N-1, the next value of the parameter i will roll back to the minimum value 0 (i.e., i=(i+1)%N=0). Whenever N packets have been sequentially dispatched to NPU cores 116_1-116_N (i.e., NPU[0]-NPU[N-1]), the next packet will be dispatched to the NPU core 116_1 (i.e., NPU[0]). That is, dispatching packets to NPU cores is based on a modulo operation. For example, assuming that the packet currently waiting to be dispatched is the (K+1)^{th} packet PKT_{K} in the input flow S_IN, since the previous 1^{st} packet PKT₀ to K^{th} packet PKTₖ₋₁ are dispatched to the NPU cores NPU[0]-NPU[N-1] in sequence, the next packet will be dispatched to the NPU core NPU[0] whenever N packets have been dispatched to the NPU cores NPU[0]-NPU[N-1] in sequence. Therefore, the (K+1)^{th} packet PKT_{K} will be dispatched to the NPU core NPU[K%N] according to the modulo operation. Assuming that the packet currently waiting to be dispatched is the 9^{th} packet (K=8) with the packet serial number SEQ=8 and the number of NPU cores is 4 (N=4), the 9^{th} packet (K=8) with the packet serial number SEQ=8 will be dispatched to the NPU core NPU[0] according to the modulo operation (e.g., the remainder of 8/4 is 0) . Assuming that the packet currently waiting to be dispatched is the 14^{th} packet (K=13) with the packet serial number SEQ=13 and the number of NPU cores is 4 (N=4), the 14^{th} packet (K=13) with the packet serial number SEQ=13 will be dispatched to the NPU core NPU[1] according to the modulo operation (e.g., the remainder of 13/4 is 1). Dispatching other packets to NPU cores follows the same rules. Furthermore, as mentioned above, the numerical range of the packet serial number SEQ is {0, 1, 2, ..., M-1}. Therefore, when the packet serial number SEQ continuously increases and reaches its maximum value M-1, the next packet serial number SEQ will roll back to its minimum value 0. Assuming that the packet currently waiting to be dispatched is the (M+1)^{th} packet (K=M) with the packet serial number SEQ=0 and the number of NPU cores is 4 (N=4), the (M+1)^{th} packet (K=M) with the packet serial number SEQ=0 will be dispatched to the NPU core NPU [M%N] according to the modulo operation. Assuming that the packet currently waiting to be dispatched is the (M+9)^{th} packet (K=M+8) with the packet serial number SEQ=8 and the number of NPU cores is 4 (N=4), the (M+9)^{th} packet (K=M+8) with the packet serial number SEQ=8 will be dispatched to the NPU core NPU[(M+8)%N] according to the modulo operation. Assuming that the packet currently waiting to be dispatched is the (M+14)^{th} packet (K=M+13) with the packet serial number SEQ=13 and the number of NPU cores is 4 (N=4), the (M+14)^{th} packet (K=M+13) with the packet serial number SEQ=13 will be dispatched to the NPU core NPU[(M+13)%N] according to the modulo operation. Dispatching other packets to NPU cores follows the same rules.

As shown in FIG. 1, each packet processing circuit 112_1/112_N includes a ring buffer 114_1/114_N, an NPU core 116_1/116_N, and an output buffer 118_1/118_N. The ring buffer 114_1/114_N stores a packet descriptor PKT_DESCR of a corresponding packet to be processed by the NPU core 116_1/116_N. Therefore, the NPU core 116_1/116_N reads the packet descriptor PKT_DESCR (which includes information such as the buffer address pkt_address and the packet length pkt_len) of the current to-be-processed packet from the ring buffer 114_1/114_N, and reads the packet from the packet buffer 110 and performs related packet processing according to the information provided by the packet descriptor PKT_DESCR. In addition, after completing processing of the packet, the NPU core 116_1/116_N writes the packet information PKT_INF into the output buffer 118_1/118_N. In addition to the regular buffer address pkt_address, packet length pkt_len and other information, the packet information PKT_INF may further include the packet serial number SEQ dispatched by the packet dispatch circuit 102 and/or a flag discard_flag set by the NPU core 116_1/116_N.

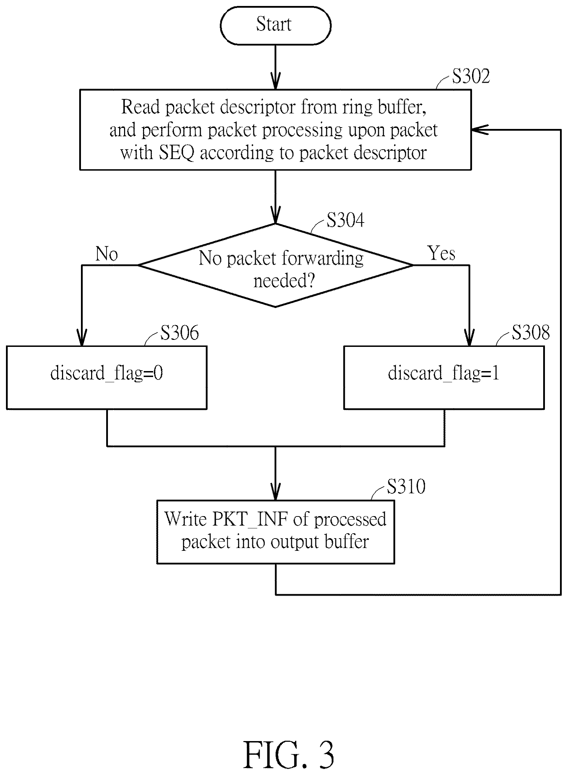

FIG. 3 is a flowchart of a packet processing operation according to an embodiment of the present invention. The operation shown in FIG. 3 may be performed by each packet processing circuit 112_1/112_N shown in FIG. 1. Provided that the result is substantially the same, the steps are not required to be executed in the exact order shown in FIG. 3. In step S302, the NPU core 116_1/116_N reads the packet descriptor in the corresponding ring buffer 114_1/114_N, and performs packet processing on the packet PKT with the packet serial number SEQ (which is dispatched by packet dispatch circuit 102) according to the packet descriptor. During the packet processing procedure, the NPU core 116_1/116_N determines whether the packet PKT needs to be forwarded (step S304) . For example, the NPU core 116_1/116_N determines whether the packet needs to be discarded or whether the packet is an empty packet. If the packet PKT needs to be forwarded (i.e., the packet does not need to be discarded and the packet is not an empty packet), the NPU core 116_1/116_N performs normal processing for sending the packet. In step S306, the NPU core 116_1/116_N sets the flag discard_flag=0 to mark that this packet PKT needs to be sent from the network packet processing device 100. If the packet PKT does not need to be forwarded (i.e., the packet needs to be discarded or the packet is an empty packet), the NPU core 116_1/116_N performs out-of-order handling. In step S308, the NPU core 116_1/116_N sets the flag discard_flag=1 to mark that this packet PKT does not need to be sent from the network packet processing device 100. In step S310, the NPU core 116_1/116_N writes the packet information PKT_INF of the processed packet PKT into the output buffer 118_1/118_N, where the packet information PKT_INF includes regular information (e.g., pkt_address and pkt_len) and additional information (e.g., packet serial number SEQ and discard_flag) added by the present invention for use in the subsequent order-preserved sending operation.

As mentioned above, the packet dispatch circuit 102 uses an average dispatch method. Therefore, according to the predetermined order of the packet processing circuits 112_1 to 112_N (e.g., i=(i+1)%N), the packet dispatch circuit 102 dispatches a plurality of packets, including packets actually received by the network packet processing device 100 from the network and/or empty packets used by the packet dispatch circuit 102 for load balance adjustment, to the packet processing circuits 112_1-112_N for multi-core parallel processing. However, the processed packets generated by the parallel processing of different NPU cores 116_1-116_N must maintain the order in the original flow and have no out-of-order packets when they are actually forwarded. Therefore, the packet order-preserving processing circuit 106 reads the packet processing circuits 112_1-112_N (particularly, output buffers 118_1-118_N of packet processing circuits 112_1-112_N) according to the predetermined order (e.g., i=(i+1)%N) adopted by the packet dispatch circuit 102. For example, the packet order-preserving processing circuit 106 sequentially reads an output buffer of NPU core NPU[0], an output buffer of NPU core NPU[1], an output buffer of NPU core NPU[2], and so on. Furthermore, after the packet order-preserving processing circuit 106 reads the output buffer of NPU core NPU[N-1], it subsequently reads the output buffer of NPU core NPU[0], the output buffer of NPU core NPU[1], the output buffer of NPU core NPU[2], and so on. Additionally, the packet serial number SEQ in the packet information PKT_INF can be used to detect whether an out-of-order packet has occurred, and the flag discard_flag in the packet information PKT_INF can be used to indicate whether packet sending is needed.

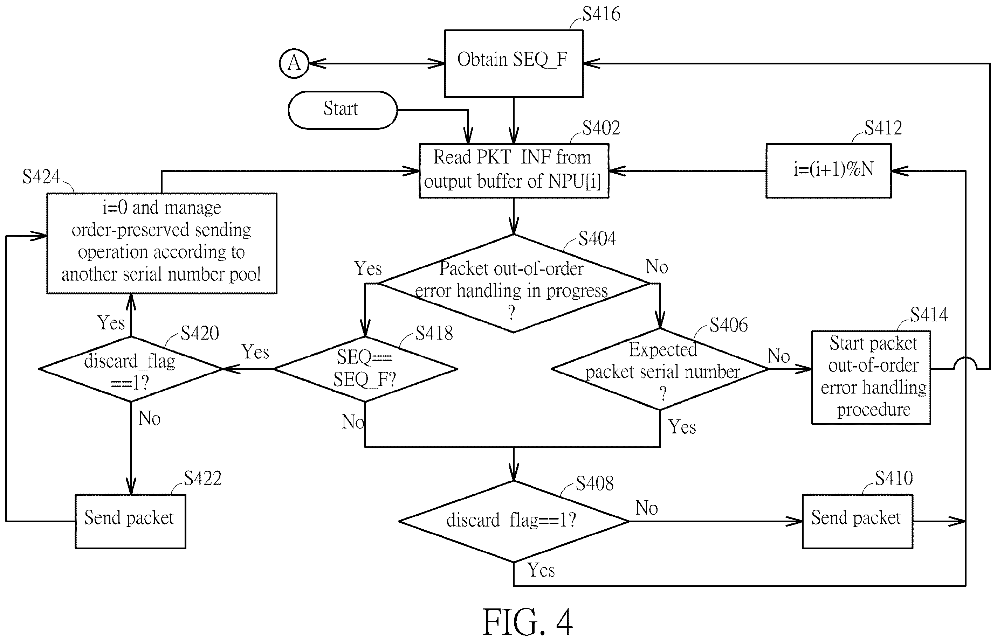

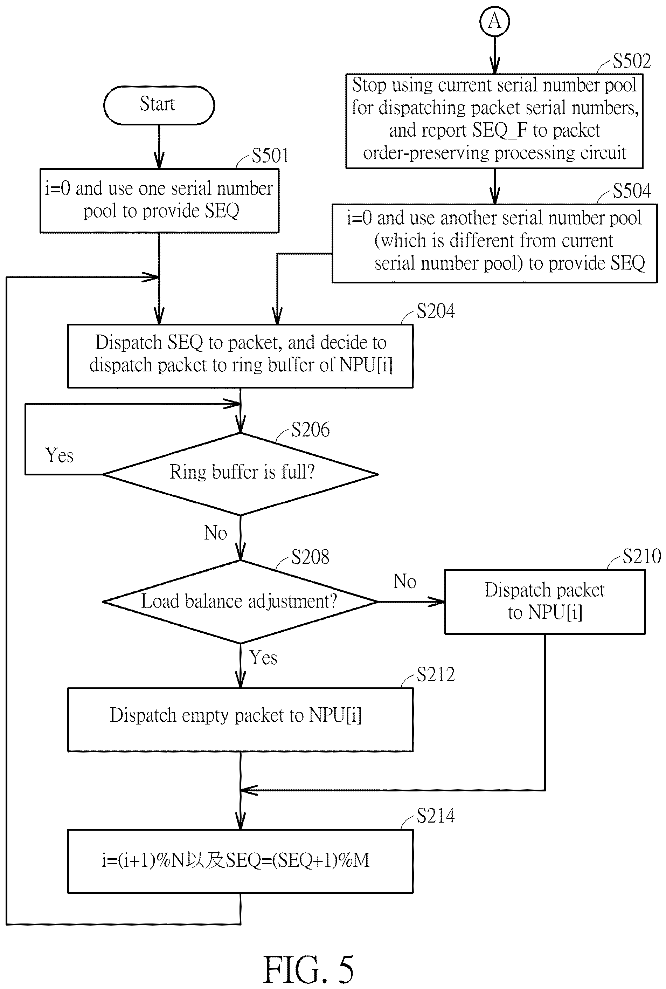

Please refer to FIG. 4 in conjunction with FIG. 5. FIG. 4 is a flowchart of an order-preserving sending operation supporting a packet out-of-order error handling mechanism according to an embodiment of the present invention. FIG. 5 is a flowchart of a packet dispatch operation and a packet serial number dispatch operation both supporting the packet out-of-order error handling mechanism according to an embodiment of the present invention. The operation shown in FIG. 4 may be performed by the packet order-preserving processing circuit 106 shown in FIG. 1. Provided that the result is substantially the same, the steps are not required to be executed in the exact order shown in FIG. 4. The operations shown in FIG. 5 may be performed by the packet dispatch circuit 102 shown in FIG. 1. Compared to the operations originally shown in FIG. 2, the operations shown in FIG. 5 include additional steps that are related to the packet out-of-order error handling mechanism. Provided that the result is substantially the same, the steps are not required to be executed in the exact order shown in FIG. 5.

In step S501 shown in FIG. 5, the packet dispatch circuit 102 initializes the parameter i and the packet serial number SEQ, where the parameter i is used to control packet dispatch, and the packet serial number SEQ is used to control packet serial number dispatch. For brevity and simplicity, it is assumed that the packet dispatch circuit 102 has two serial number pools 120_1 and 120_K (K=2), where the numerical range of the serial number pool 120_1 is {0, 1, 2, ..., M-1}, and the numerical range of the serial number pool 120_2 is {M, M+1, M+2, ..., 2M-1}. In addition, the packet dispatch circuit 102 initially selects the serial number pool 120_1 to provide the packet serial number SEQ. Furthermore, the numerical range of parameter i is {0, 1, 2, ..., N-1}, and N NPU cores 116_1-116_N are denoted by NPU[0]-NPU[N-1], respectively. In step S501, an initial value of the parameter i is 0 (i.e., i=0), and an initial value of the packet serial number SEQ is 0 (i.e., SEQ=0). At this moment, since the packet order-preserving processing circuit 106 does not start the packet out-of-order error handling procedure yet, the packet dispatch circuit 102 does not need to execute steps S502 and S504. Since details of the subsequent steps related to the packet dispatch operation and the packet serial number dispatch operation can be known by referring to the above description of steps in FIG. 2, the same description is omitted here for brevity.

In step S402, the packet order-preserving processing circuit 106 decides to start reading the packet information PKT_INF (which includes the packet serial number SEQ and the flag discard_flag) from an output buffer (i.e., ring buffer 118_1) of the NPU core NPU[i] (i.e., NPU[i]=NPU[0]). In step S404, the packet order-preserving processing circuit 106 determines whether the packet out-of-order error handling procedure is currently in progress. Since the packet order-preserving processing circuit 106 does not start the packet out-of-order error handling procedure yet, the flow proceeds to step S406. In step S406, the packet order-preserving processing circuit 106 determines whether the packet serial number SEQ is consistent with the predetermined packet serial number order (e.g., **0 → 1→ 2 → ··· → (M - 1) → 0 → 1···)**. That is, the packet order-preserving processing circuit 106 determines whether the packet serial number SEQ is equal to an expected packet serial number. If the packet is a packet to which the packet dispatch circuit 102 dispatches the packet serial number for the first time according to the current serial number pool, the expected packet serial number is the initial packet serial number offered by the current serial number pool (i.e., SEQ=0). On the other hand, if the packet is not the packet to which the packet dispatch circuit 102 dispatches the packet serial number for the first time according to the current serial number pool, the expected packet serial number depends on a packet serial number of the previously processed packet plus 1 (i.e., SEQ=(SEQ+1)%M).

If the packet order-preserving processing circuit 106 determines that the packet serial number SEQ is equal to the expected packet serial number (e.g., packet serial numbers of a previous packet and a current packet are consecutive) (step S406), the packet order-preserving processing circuit 106 determines whether the flag discard_flag is set by 1 (step S408). If the flag discard_flag is set by 1, it means that the packet should be discarded or is an empty packet. Therefore, the packet order-preserving processing circuit 106 updates the parameter i (e.g., i=(i+1)%N) (step S412). Next, the flow returns to step S402. On the other hand, if the flag discard_flag is set by 0, it means that the packet needs to be forwarded. Therefore, the packet order-preserving processing circuit 106 sends the packet (step S410), and then updates the parameter i (e.g., i=(i+1) %N) (step S412). Next, the flow returns to step S402.

If the packet order-preserving preservation processing circuit 106 determines that the packet serial number SEQ is different from the expected packet serial number (e.g., packet serial numbers of a previous packet and a current packet are not consecutive) (step S406), it means that hardware of the packet dispatch circuit 102 may suffer an unexpected abnormality. Therefore, the packet dispatch circuit 102 needs to be reset for resetting the packet serial number. At this moment, the packet order-preserving processing circuit 106 starts the packet out-of-order error handling procedure (step S414) .

In response to activation of the packet out-of-order error handling procedure, both of the packet order-preserving processing circuit 106 and the packet dispatch circuit 102 perform related operations. In step S502, the packet dispatch circuit 102 stops using the current serial number pool (e.g., serial number pool 120_1) for dispatching packet serial numbers, and reports the last dispatched packet serial number SEQ_F of the current serial number pool to the packet order-preserving processing circuit 106. Therefore, the packet order-preserving processing circuit 106 obtains the last dispatched packet serial number SEQ_F of the current serial number pool (e.g., serial number pool 120_1) from the packet dispatch circuit 102 (step S416). In step S504, the packet dispatch circuit 102 is reset (i=0), and switches to another serial number pool (which is different from the current serial number pool) to continue dispatching packet serial numbers. For example, if the current serial number pool is the serial number pool 120_1, the packet dispatch circuit 102 switches to the serial number pool 120_K (K=2), and resets the packet serial number to an initial value of the serial number pool 120_K (K=2) (i.e., SEQ=M). If the current serial number pool is the serial number pool 120_K (K=2), the packet dispatch circuit 102 switches to the serial number pool 120_1, and resets the packet serial number to an initial value of the serial number pool 120_1 (i.e., SEQ=0).

After obtaining the last dispatched packet serial number SEQ_F, the packet order-preserving processing circuit 106 no longer checks whether the packet serial numbers are consecutive. Instead, the packet order-preserving processing circuit 106 sends out all to-be-forwarded packets with packet serial numbers within a numeral range from the current packet serial number SEQ to the last dispatched packet serial number SEQ_F. After completing the processing (e.g., discarding or forwarding) of a packet with the last dispatched packet serial number SEQ_F, the packet order-preserving processing circuit 106 manages the order-preserved sending operation according to another serial number pool that is different from the current serial number pool. For example, step S406 refers to another serial number pool to check the packet serial number. In a case where the current serial number pool is the serial number pool 120_1, the packet order-preserving processing circuit 106 uses the serial number pool 120_K (K=2) to manage the follow-up order-preserved sending operation. In another case where the current serial number pool is the serial number pool 120_K (K=2), the packet order-preserving processing circuit 106 uses the serial number pool 120_1 to manage the follow-up order-preserved sending operation.

After starting the packet out-of-order error handling procedure, the packet order-preserving processing circuit 106 continues to read the packet information PKT_INF (which includes the packet serial number SEQ and the flag discard_flag) from the output buffer of the NPU core NPU[i] according to the current value of the parameter i (step S402). In step S404, the packet order-preserving processing circuit 106 determines whether the packet out-of-order error handling procedure is currently in progress. Since the packet order-preserving processing circuit 106 has started the packet out-of-order error handling procedure, the flow proceeds to step S418. In step S418, the packet order-preserving processing circuit 106 determines whether the packet serial number SEQ obtained in step S402 is equal to the last dispatched packet serial number SEQ_F obtained in step S416.

If the packet serial number SEQ is not equal to the last dispatched packet serial number SEQ_F yet (step S418), the packet order-preserving processing circuit 106 determines whether the flag discard_flag is set by 1 (step S408). If the flag discard_flag is set by 1, it means that the packet is to be discarded or is an empty packet. Therefore, the packet order-preserving processing circuit 106 updates the parameter i (e.g., i=(i+1)%N) (step S412). Next, the flow returns to step S402 to continue executing the packet out-of-order error handling procedure. On the other hand, if the flag discard_flag is set by 0, it means that the packet needs to be forwarded. Therefore, the packet order-preserving processing circuit 106 sends the packet (step S410), and then updates the parameter i (e.g., i=(i+1)%N) (step S412). Next, the flow returns to step S402 to continue executing the packet out-of-order error handling procedure.

If the packet serial number SEQ is equal to the last dispatched packet serial number SEQ_F (step S418), it means that all to-be-forwarded packets with packet serial numbers within the numerical range starting from the current packet serial number SEQ to the last dispatched packet serial number SEQ_F have been sent, except a packet with the last dispatched packet serial number SEQ_F. The packet order-preserving processing circuit 106 determines whether the flag discard_flag is set by 1 (step S420). If the flag discard_flag is set by 1, it means that the packet needs to be discarded or is an empty packet. Therefore, the packet order-preserving processing circuit 106 does not need to send out the packet with the last dispatched packet serial number SEQ_F, and directly executes step S424 to resume the normal processing flow. On the other hand, if the flag discard_flag is set by 0, it means that the packet needs to be forwarded. Therefore, the packet order-preserving processing circuit 106 sends the packet (step S422), and then executes step S424 to resume the normal processing flow. That is, after step S420 or S422, processing (e.g., discarding or forwarding) of the packet with the last dispatched packet serial number SEQ_F has been completed.

In step S424, the packet order-preserving processing circuit 106 resets the parameter i (i.e., i=0) and manages the order-preserved sending operation according to another serial number pool that is different from the current serial number pool. For example, if the current serial number pool is the serial number pool 120_1, the packet order-preserving processing circuit 106 starts a packet serial number check from an initial value (SEQ=M) of the serial number pool 120_K (K=2), to determine whether the packet serial number is equal to an expected packet serial number (i.e., whether packet serial numbers of a previous packet and a current packet are consecutive) . For another example, if the current serial number pool is the serial number pool 120_K (K=2), the packet order-preserving processing circuit 106 starts a packet serial number check from an initial value (SEQ=0) of the serial number pool 120_1, to determine whether the packet serial number is equal to an expected packet serial number (i.e., whether packet serial numbers of a previous packet and a current packet are consecutive). After completing step S424, the packet order-preserving processing circuit 106 resumes the normal processing flow. Therefore, the flow returns to step S402.

In summary, with the aid of the multi-core parallel processing architecture proposed by the present invention, a plurality of packets are dispatched to a plurality of packet processing circuits for undergoing parallel processing through the plurality of packet processing circuits (particularly, NPU cores within the plurality of packet processing circuits). Each NPU core processes a packet individually without relying on other NPU cores. In other words, when each NPU core performs a packet processing task, it does not affect packet processing tasks being performed by other NPU cores. Thus, the multi-core parallel processing architecture proposed by the present invention can effectively improve packet forwarding efficiency. Furthermore, the multi-core parallel processing architecture proposed by the present invention also supports an order-preserving processing mechanism, ensuring that the processed packets generated through parallel processing of different NPU cores maintain the order of the original flow during actual packet forwarding. Moreover, the multi-core parallel processing architecture proposed by the present invention also supports a packet out-of-order error handling mechanism that allows the packet dispatch circuit to be reset when its hardware suffers an unexpected abnormality, thus ensuring normal system operations.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network packet processing device (100) comprising:
a parallel processing circuit (104), comprising:
a plurality of packet processing circuits (112_1, 112_N), arranged to process different packets in parallel, wherein each of the plurality of packet processing circuits (112_1, 112_N) comprises:
a network processing unit, in the following also referred to as NPU, core (116_1, 116_N);
a packet dispatch circuit (102), arranged to dispatch a plurality of packets to the plurality of packet processing circuits (112_1, 112_N), respectively; and
a packet order-preserving processing circuit (106), arranged to perform an order-preserved sending operation upon a plurality of processed packets generated by the parallel processing circuit (104), wherein the plurality of processed packets comprise a first processed packet and a second processed packet corresponding to a first packet and a second packet included in the plurality of packets, respectively, and an order of the first processed packet and the second processed packet in an output flow sent from the packet order-preserving processing circuit (106) is the same as an order of the first packet and the second packet in an input flow received by the packet dispatch circuit (102).

2. A network packet forwarding method comprising:
processing, by a plurality of packet processing circuits of a parallel processing circuit, different packets in parallel, wherein each of the plurality of packet processing circuits comprises a network processing unit, in the following also referred to as NPU, core;
dispatching a plurality of packets to the plurality of packet processing circuits, respectively; and
performing an order-preserved sending operation upon a plurality of processed packets generated by the parallel processing circuit, wherein the plurality of processed packets comprise a first processed packet and a second processed packet corresponding to a first packet and a second packet included in the plurality of packets, respectively, and an order of the first processed packet and the second processed packet in an output flow sent is the same as an order of the first packet and the second packet in an input flow.

3. The network packet processing device (100) of claim 1, wherein the packet dispatch circuit (102) refers to a predetermined order of the plurality of packet processing circuits (112_1, 112_N), to dispatch the plurality of packets to the plurality of packet processing circuits (112_1, 112_N), respectively, and wherein the packet order-preserving processing circuit is configured to read from the plurality of packet processing circuits (112_1, 112_N) according to the predetermined order; or
the network packet forwarding method of claim 2, wherein dispatching the plurality of packets to the plurality of packet processing circuits, respectively, comprises:
according to a predetermined order of the plurality of packet processing circuits, dispatching the plurality of packets to the plurality of packet processing circuits, respectively,
and wherein performing the order-preserving sending of the plurality of processed packets generated by the parallel processing circuit comprises:
reading from the plurality of packet processing circuits according to the predetermined order.

4. The network packet processing device (100) of claim 1 or 3, wherein each of the plurality of packet processing circuits (112_1, 112_N) further comprises:
a ring buffer (114_1, 114_N), arranged to store a packet descriptor of a packet, wherein the packet descriptor comprises a packet serial number,
wherein the NPU core (116_1, 116_N) is arranged to read the packet descriptor from the ring buffer (114_1, 114_N), and perform packet processing of the packet according to the packet descriptor; or
the network packet forwarding method of claim 2 or 3, wherein each of the plurality of packet processing circuits further comprises:
a ring buffer, arranged to store a packet descriptor of a packet, wherein the packet descriptor comprises a packet serial number,
wherein the NPU core reads the packet descriptor from the ring buffer, and performs packet processing of the packet according to the packet descriptor.

5. The network packet processing device (100) of claim 4, wherein the packet dispatch circuit (102) is further arranged to refer to a predetermined packet serial number order, to dispatch a plurality of packet serial numbers to the plurality of packets, respectively; or
the network packet forwarding method of claim 4, wherein dispatching the plurality of packets to the plurality of packet processing circuits, respectively, comprises:
according to a predetermined packet serial number order, dispatching a plurality of packet serial numbers to the plurality of packets, respectively.

6. The network packet processing device (100) or the network packet forwarding method of claim 5, wherein the plurality of packets comprise an empty packet used for load balance adjustment, and the plurality of packet serial numbers comprise a packet serial number dispatched to the empty packet.

7. The network packet processing device (100) of claim 5 or 6, wherein each of the plurality of packet processing circuits (112_1, 112_N) further comprises:
an output buffer (118_1, 118_N),
wherein the NPU core (116_1, 116_N) is further arranged to write a packet information into the output buffer (118_1, 118_N) after completing the packet processing of the packet, and the packet information comprises the packet serial number; or
the network packet forwarding method of claim 5 or 6, wherein each of the plurality of packet processing circuits further comprises:
an output buffer,
wherein the NPU core further writes a packet information into the output buffer after completing the packet processing of the packet, and the packet information comprises the packet serial number.

8. The network packet processing device (100) of claim 7, wherein the packet order-preserving processing circuit (106) is further arranged to read the packet information stored in the output buffer (118_1, 118_N), and manage the order-preserved sending operation according to the packet serial number included in the packet information and the predetermined packet serial number order; or
the network packet forwarding method of claim 7, wherein performing the order-preserved sending operation upon the plurality of processed packets generated by the parallel processing circuit comprises:
reading the packet information stored in the output buffer, and
managing the order-preserved sending operation according to the packet serial number included in the packet information and the predetermined packet serial number order.

9. The network packet processing device (100) of claim 8, wherein when the packet serial number is inconsistent with the predetermined packet serial number order, the packet dispatch circuit (102) is further arranged to stop using a current serial number pool (120_1) for dispatching packet serial numbers and switch to another serial number pool (120_K) for dispatching packet serial numbers, and the packet order-preserving processing circuit (106) is further arranged to obtain a last dispatched packet serial number of the current serial number pool (120_1) from the packet dispatch circuit (102), and manage the order-preserved sending operation according to the another serial number pool (120_K) after completing processing of a packet with the last dispatched packet serial number; or
the network packet forwarding method of claim 8, further comprising:
in response to the packet serial number being inconsistent with the predetermined packet serial number order, stopping using a current serial number pool for dispatching packet serial numbers, and switching to another serial number pool for dispatching packet serial numbers, and
managing the order-preserved sending operation according to the packet serial number included in the packet information and the predetermined packet serial number order comprises:
in response to the packet serial number being inconsistent with the predetermined packet serial number order, obtaining a last dispatched packet serial number of the current serial number pool, and managing the order-preserved sending operation according to the another serial number pool after completing processing of a packet with the last dispatched packet serial number.

10. The network packet processing device of any one of claims 7 to 9, wherein the NPU core (116_1, 116_N) is further arranged to write a flag into the output buffer (118_1, 118_N) after completing the packet processing of the packet, the flag is arranged to indicate whether the packet does not need to be forwarded, and the packet order-preserving processing circuit (106) is further arranged to read the flag stored in the output buffer (118_1, 118_N), and manage the order-preserved sending operation according to the flag; or
the network packet forwarding method of any one of claims 7 to 9, wherein the NPU core further writes a flag into the output buffer after completing the packet processing of the packet, the flag is arranged to indicate whether the packet does not need to be forwarded, and performing the order-preserved sending operation upon the plurality of processed packets generated by the parallel processing circuit comprises:
reading the flag stored in the output buffer, and managing the order-preserved sending operation according to the flag.

11. A network packet processing device (100) comprising:
a parallel processing circuit (104), comprising a plurality of network processing unit, in the following also referred to as NPU, cores (116_1, 116_N), the plurality of NPU cores comprising:
a first NPU core (116_1), arranged to complete processing of a first packet individually without relying on other NPU cores (116_N) included in the plurality of NPU cores (116_1, 116_N), and generate a first processed packet;
a packet dispatch circuit (102), arranged to dispatch the first packet to the first NPU core (116_1); and
a packet sending circuit (106), arranged to send the first processed packet.

12. The network packet processing device (100) of claim 11, wherein the first NPU core (116_1) is an NPU core currently used for packet processing, and the packet dispatch circuit (102) is further arranged to dispatch an empty packet to the first NPU core (116_1) when a load of the first NPU core (116_1) meets a load condition.
